# EUROPÄISCHE PATENTSCHRIFT

(11) **EP 3 212 434 B1**
(45) Veröffentlichungstag und Bekanntmachung des Hinweises auf die Patenterteilung: **02.12.2020**
(21) Anmeldenummer: 15797838.8
(22) Anmeldetag: 27.10.2015
(51) Int. Cl.: B60B 3/04, B60B 23/08

(54) **FAHRZEUGRAD UND VERFAHREN ZUR HERSTELLUNG EINES FAHRZEUGRADS MIT EINER VERBINDUNG ZWISCHEN EINER RADFELGE UND EINER RADSCHEIBE**
VEHICLE WHEEL AND METHOD FOR THE PRODUCTION OF A VEHICLE WHEEL WITH A CONNECTION BETWEEN A WHEEL RIM AND A WHEEL DISC
ROUE DE VÉHICULE ET PROCÉDÉ POUR FABRIQUER UNE ROUE DE VÉHICULE COMPORTANT UN RACCORDEMENT ENTRE UNE JANTE ET UN DISQUE DE ROUE

(30) Priorität: 27.10.2014 DE 102014115591; 27.10.2014 DE 102014115593
(43) Veröffentlichungstag der Anmeldung: 06.09.2017
(73) Patentinhaber: ThyssenKrupp Carbon Components GmbH, 01723 Wilsdruff STT Kesselsdorf (DE)
(72) Erfinder: WERNER, Jens, 01640 Coswig (DE); KÖHLER, Christian, 01099 Dresden (DE); MÄKE, Sandro, 01796 Dohma (DE); DRESSLER, Michael, 01159 Dresden (DE); HEILMANN, Christian, 01127 Dresden (DE); FRANKE, Florian, 01127 Dresden (DE)
(74) Vertreter: Meissner Bolte Partnerschaft mbB
(86) Internationale Anmeldenummer: PCT/DE2015/100453
(87) Internationale Veröffentlichungsnummer: WO 2016/066162

(56) Entgegenhaltungen:
- GB-A- 684 821
- US-A- 1 971 604

## Beschreibung

Die Erfindung betrifft ein Fahrzeugrad mit einer Radfelge und einer Radscheibe, wobei die Radscheibe mittels wenigstens eines Verbindungselements mit der Radfelge verbunden ist, welches in einem Durchgang des Felgenbetts geführt und in der Radscheibe eingefügt ist.

Die Erfindung betrifft auch ein Verfahren zur Herstellung der Verbindung zwischen der Radfelge und der Radscheibe des Fahrzeugrads.

Das Fahrzeugrad wird für motorisierte Fahrzeuge aller Art, insbesondere als Leichtbau-Fahrzeugrad für Personenkraftfahrzeuge und Motorräder angewandt.

Die Radscheibe kann als Radstern mit Speichen (Speichenrad) oder als weitestgehend geschlossen flächige Radschüssel ausgebildet sein.

Eine Vorrichtung dieser Art ist aus der Druckschrift US 2004/0021365 A1 bekannt. Bei diesem Fahrzeugrad ist eine sternförmige Radscheibe (Radstern, Speicheneinheit) mittels mehrerer Verbindungselemente mit der Radfelge verbunden, die als Senkkopf-Blindnieten oder Senkkopf-Schraubbolzen ausgebildet sind. Die Verbindungselemente führen von der Felgenaußenseite der Radfelge her durch jeweils ein Durchgangsloch im Tiefbett des Felgenbetts und sind felgeninnenseitig mit der anliegenden Speicheneinheit vernietet bzw. verschraubt.

Die Verbindungselemente weisen zur Erleichterung des Reifenaufziehens einen Kopf auf, der sehr flach ausgebildet und im eingefügten Zustand weitestgehend bündig zur felgenaußenseitigen Kontur des Felgenbetts versenkt angeordnet ist.

Die Senkkopf-Blindnieten bestehen zum Zwecke der verbindenden Verformung aus weichem Material, so dass mit diesen Verbindungselementen im Einzelnen nur geringe Kräfte übertragen werden können. Zudem verbleiben nach deren Montage einkerbende Bruchstellen des abgetrennten Nietdorns im Senkkopf.

Die Senkkopf-Schraubbolzen verfügen zu ihrer Montage jeweils über eine Hilfsgeometrie für den Eingriff des Montagewerkzeugs, die im Senkkopf als Innensechskant ausgebildet ist.

Diese Senkkopf-Schraubbolzen sind durch die integrierte Hilfsgeometrie im Querschnitt geschwächt. Die Verjüngung des Querschnitts des Verbindungselements im Bereich des im Felgenbett eingelassenen Kopfes schmälert die mit dem Verbindungselement übertragbaren Kräfte, was die Verbindung insbesondere bei der auftretenden Dauerbelastung des Fahrzeugrades schwächt.

Darüber hinaus erzeugt diese Hilfsgeometrie der Senkkopf-Schraubbolzen, wie auch die Bruchstelle des Nietdorns, eine Kerbwirkung, welche die Festigkeit des Verbindungselementes zusätzlich herabsetzt.

Das kann bei hohen Wechselbelastungen, insbesondere bei Missbrauchslasten, zum vorzeitigen Bruch des Verbindungselements und damit der Verbindung führen.

Werden - um dem entgegenzuwirken - Verbindungselemente mit größerem Querschnitt verwendet, führt dies zu einem unerwünscht größeren Platzbedarf für die Verbindung im Felgenbett und zu einer unerwünscht höheren Masse des Fahrzeugrades.

Außerdem führt ein großer Querschnitt insbesondere des Kopfes regelmäßig zu einer über das Felgenbett überstehenden Kontur, zumindest jedoch zu einem inhomogenen Verlauf der Kontur des Felgenbetts, was das Aufziehen des Reifens erschwert und darüber hinaus die Gefahr der Beschädigung des Reifen mit sich bringt.

Der Erfindung liegt deshalb die Aufgabe zugrunde, die Nachteile des Standes der Technik zu beseitigen und insbesondere ein Verfahren zur Herstellung eines Fahrzeugrades bereitzustellen, mit welchem die Zuverlässigkeit und Haltbarkeit der Verbindung zwischen Radfelge und Radscheibe bei zugleich geringem Masseneinsatz und Platzbedarf verbessert wird.

Zur Lösung der Aufgabe ist vorgesehen, dass nach dem erfolgten Fügen des Verbindungselements in der Radscheibe ein Abschnitt des Kopfes des Verbindungselements felgenaußenseitig über das Felgenbett überstehend verbleibt und anschließend der Kopf des Verbindungselements zumindest teilweise entfernt wird.

Das Verbindungselement kann vorzugsweise eine Schraube, ein Schraubbolzen, ein Gewindestab oder ein Niet sein und mit einem beliebig geformten Kopf ausgestattet sein, welcher gewöhnlich eine Hilfsgeometrie zur Montage des Verbindungselements aufweist.

Bei diesem Verfahren bleibt nach dem Einfügen des Verbindungselements in die Radscheibe ein Abschnitt seines Kopfes oberhalb der Felgenaußenseite des Felgenbetts stehen, wobei nachfolgend ein Teil des Kopfes des Verbindungselements durch nachträgliche Bearbeitung entfernt, was beispielsweise durch Schneiden, Fräsen oder Abtrennen entlang einer Sollbruchebene erfolgen kann.

Der entfernte Teil des Kopfes kann unmittelbar dem nach dem Fügen felgenaußenseitig überstehenden Abschnitt des Kopfes entsprechen oder auch weniger oder mehr als diesen Abschnitt umfassen.

Dementsprechend kann der im Felgenbett verbleibende, reduzierte Teil des Kopfes teilweise oder vollständig bündig mit der felgenaußenseitigen Kontur des Felgenbetts abschließen oder geringfügig über der felgenaußenseitige Kontur des Felgenbetts überstehen.

Bei der Ausführung des Verfahrens weist das Verbindungselement durch die nachträgliche Bearbeitung des Kopfes einen abgeflachten, lediglich in seiner Höhe reduzierten Teil des Kopfes, welcher dennoch in ausreichendem Maße zur Kraftübertragung innerhalb der Verbindung zur Verfügung steht.

In jedem Fall wird durch das erfindungsgemäße Verfahren eine Reduzierung der Masse des in der fertig hergestellten Verbindung verbleibenden Verbindungselements erreicht, ohne die kraftübertragende Wirkung der Verbindung zu beeinträchtigen.

Die Erfindung geht weiter davon aus, dass ein nach dem Fügen felgenaußenseitig überstehend verbleibender Abschnitt des Kopfes nicht an der Kraftübertragung der Verbindung beteiligt ist.

Folglich ist zumindest auch ein Teil der im oder am Kopf integrierten, zum Fügen der Verbindung vorgesehenen Hilfsgeometrie, per se vom Kraftfluss ausgenommen und wirkt zum Vorteil der Gesamtbilanz der Kraftübertragung weniger querschnittsschwächend bzw. mit geringerer inhomogener Spannungsverteilung.

Eine derartige Hilfsgeometrie, an der oder in die ein Montagewerkzeug angreift, kann beispielsweise ein Steg, ein Schlitz, ein Innensechskant oder eine anders geformte Inbus-Ausnehmung im Verbindungselement sein.

In einer vorteilhaften Verfahrensausführung ist das Verbindungselement als Teil einer Verbindungsanordnung vorgesehen, wobei nach dem Fügen der Verbindungsanordnung in der Radfelge und der Radscheibe ein Abschnitt der Verbindungsanordnung felgenaußenseitig über das Felgenbett überstehend verbleibt und anschließend die Verbindungsanordnung zumindest teilweise entfernt wird.

In einigen Anwendungsfällen, z.B. bei einem Felgenbett aus Faserverbundwerkstoff, insbesondere aus kohlenstofffaserverstärktem Kunststoff, ist es vorteilhaft, wenn zur Verbindung der Radscheibe mit der Radfelge eine Verbindungsanordnung mit wenigstens einem das Verbindungselement aufnehmenden Zusatzteil vorgesehen ist.

Beispielsweise kann die Verbindungsanordnung eine das Durchgangsloch auskleidende ein- oder mehrteiligen Buchse aufweisen, in welcher das Verbindungselement gelagert ist.

Ist zur Verbindung der Radscheibe mit der Radfelge eine derartige Verbindungsanordnung vorgesehen, kann die erfindungsgemäße Verbindung vorteilhafter Weise für Leichtbau-Radfelgen mit einem Felgenbett aus gewichtssparendem Faserverbundwerkstoff, insbesondere aus kohlenstofffaserverstärktem Kunststoff, eingesetzt werden.

Ein Buchsensystem trennt das Verbindungselement und - ausführungsspezifisch - auch die Radscheibe vom Felgenbett aus Faserverbundwerkstoff. Dadurch werden die Relativbewegungen zwischen dem Felgenbett und dem Verbindungselement bzw. der Radscheibe entkoppelt, wodurch Schwingreibverschleiß am Faserverbundwerkstoff und ggf. auch Kontaktkorrosion zwischen der Radfelge aus Faserverbundwerkstoff und einer Radscheibe aus anderem Material vermieden werden kann. Zudem wird eine bessere Kompatibilität der unterschiedlichen Wärmeausdehnungen dieser Bauteile erreicht.

Das vorliegende erfindungsgemäße Verfahren ist auch auf diese Ausführung der Verbindung anwendbar, wobei die vorstehend genannten Vorzüge betreffs der Ausführung mit nur einem Verbindungselement ebenso erzielt werden.

Bei dieser Verfahrensausführung bleibt nach dem Fügen des Verbindungselements ein Abschnitt der Verbindungsanordnung oberhalb der Felgenaußenseite des Felgenbetts stehen. Dieser überstehende Abschnitt kann allein aus einem überstehenden Kopfteil des Verbindungselements bestehen oder aus einer Kombination der an der Verbindungsanordnung beteiligten Elemente gebildet sein. Anschließend werden die Teile der Verbindungsanordnung nachbearbeitet, wobei diese individuell oder gemeinsam stückweise entfernt werden, was auch hier beispielsweise durch Schneiden, Fräsen oder Abtrennen entlang einer Sollbruchebene erfolgen kann.

Die entfernten Stücke der Verbindungsanordnung können analog der Ausführung mit nur einem Verbindungselement unmittelbar dem nach dem Fügen felgenaußenseitig überstehenden Abschnitt der Verbindungsanordnung entsprechen oder auch weniger oder mehr als diesen Abschnitt umfassen.

Dementsprechend kann der im Felgenbett verbleibende, reduzierte Teil der Verbindungsanordnung teilweise oder vollständig bündig mit der felgenaußenseitigen Kontur des Felgenbetts abschließen oder geringfügig über der felgenaußenseitige Kontur des Felgenbetts überstehen.

In einer bevorzugten Verfahrensausführung wird der Kopf des Verbindungselements bzw. die Verbindungsanordnung formgebend bearbeitet, so dass das Verbindungselement bzw. die Verbindungsanordnung konturgetreu an die felgenaußenseitige Kontur des Felgenbetts angepasst wird.

Der zu bearbeitende Teil des Kopfes bzw. der Verbindungsanordnung entspricht in diesem Fall exakt dem jeweils über die Kontur der Felgenaußenseite überstehenden Abschnitt des Kopfes bzw. der Verbindungsanordnung.

Besteht der zu bearbeitende Teil der Verbindungsanordnung aus mehreren Elementen werden diese vorzugsweise in einem einzigen Arbeitsgang formgebend bearbeitet, um die felgenaußenseitige Kontur des Felgenbetts übergreifend abzubilden.

Durch diese formgebende Bearbeitung des Kopfes des Verbindungselements bzw. der Verbindungsanordnung wird ein weitestgehend stetiger Verlauf des Felgenbetts sowohl in axialer Richtung als auch umlaufend um die zylindrische Umfangsfläche der Radfelge erzeugt, in welcher die über den Umfang verteilt angeordneten Verbindungselemente im Wesentlichen konturkonform integriert sind.

Mit diesem erfindungsgemäßen Verfahren wird zum einen eine Verbindung geschaffen, die ein behinderungsfreies und schadensfreies Aufziehen des Reifens gewährleistet.

Zum anderen ermöglicht diese Verfahrensweise das Verbindungselement bzw. die Verbindungsanordnung weitestgehend unabhängig von seiner Größe in jeglichen konturierten Bereich des Felgenbetts, so auch in schmale Konturenbereiche, wie z.B. im Übergangsbereich zwischen Tiefbett und Hump, oder im Reifensitz ohne Beeinflussung der Felgenbettkontur zu integrieren.

Es bedarf keines höheren Platzbedarfs oder einer gestalterischen Anpassungen des Felgenbetts zur Unterbringung der Verbindung.

Folglich können weniger Verbindungselemente bzw. Verbindungsanordnungen mit jedoch größerem Querschnitt verwendet werden, ohne dass die Felgengeometrie hierauf mit einem größeren Bauraum und damit Massenbedarf abgestimmt werden muss.

Durch die Verwendung von Verbindungselementen bzw. Verbindungsanordnungen mit größerem Querschnitt erhöhen sich die mit jedem Verbindungselement übertragbaren Kräfte, was zu einer höheren Effizienz und Sicherheit der Verbindung führt.

Im Ergebnis des erfindungsgemäßen Verfahrens wird eine exakt an die felgenaußenseitige Kontur des Felgenbetts angepasste Verbindungsstelle hergestellt, die eine effiziente und dauerhaft sichere Verbindung der Radfelge mit der Radscheibe bei geringem Platz- und Massebedarf gewährleistet.

In einer alternativen Verfahrensausführung wird der Kopf des Verbindungselements bzw. die Verbindungsanordnung plan bearbeitet, so dass das Verbindungselement bzw. die Verbindungsanordnung zumindest teilweise bündig mit der felgenaußenseitigen Kontur des Felgenbetts abschließt oder eine Vertiefung gegenüber der felgenaußenseitigen Kontur des Felgenbetts bildet.

Diese Verfahrensweise ermöglicht die Verwendung von einfachen Werkzeugen bzw. Werkzeugmaschinen, wodurch sich das Verfahren kostengünstiger gestalten lässt. Es ist insbesondere in Bereichen des Felgenbetts, wie z.B. im Tiefbett, günstig einsetzbar, in denen geringe Konturabweichungen an der felgenaußenseitigen Kontur durch die Verbindungsstelle hinnehmbar sind.

Eine praktische Verfahrensweise sieht vor, dass der Kopf des Verbindungselement bzw. die Verbindungsanordnung durch eine spanende Bearbeitung, vorzugsweise durch Drehen, Schleifen oder Fräsen, an die felgenaußenseitige Kontur des Felgenbetts bearbeitet wird.

Die spanende Bearbeitung eignet sich besonders gut in Anwendung an der rotationssymmetrischen Radfelge. Auf diese Weise können die zu bearbeitenden Teile der Verbindungselemente bzw. der Verbindungsanordnungen mit geringem Aufwand bearbeitet werden. Das spanende Werkzeug kann schrittweise oder gleichförmig um den Umfang der Radfelge geführt werden und so alle Teile der Verbindungselemente bzw. der Verbindungsanordnungen zur spanenden Bearbeitung leicht erreichen.

Zudem wird mit der spanenden Bearbeitung der Verbindungselemente bzw. der Verbindungsanordnungen eine besonders hohe Maßgenauigkeit bei der Oberflächenausbildung erreicht, die für die sensible Anpassung der Verbindungsstelle an die felgenaußenseitige Kontur des Felgenbetts von Vorteil ist.

Eine vorteilhafte Ausführung des Verfahrens sieht vor, dass der Kopf des Verbindungselements bzw. ein radial erweiterter Abschnitt der Verbindungsanordnung zumindest teilweise in eine formschlüssig korrespondierende Ausnehmung des Durchgangsloches eingelassen wird.

Der radial erweiterte Abschnitt der Verbindungsanordnung kann beispielsweise neben dem Kopf des Verbindungselements einen felgenaußenseitig erweiterten Rand eines Buchsenteils umfassen.

Nach dem Einfügen und Bearbeitung des Verbindungselements bzw. der Verbindungsanordnung ist der verbleibende, eingelassene Teil des Kopfes des Verbindungselements bzw. des radial erweiterten Randes der Verbindungsanordnung - sowohl formschlüssig als auch kraftschlüssig - in der als Lager fungierenden Ausnehmung des Durchgangsloches gesichert.

Diese Ausführung ist mit geringem konstruktivem und technologischem Aufwand realisierbar und gewährleistet trotz der materialminimierenden Bearbeitung des Verbindungselements bzw. der Verbindungsanordnung eine sichere kraftübertragende Wirkung der Verbindung, insbesondere eine formschlüssig gestützte Sicherung der hohen Vorspannkraft des Verbindungselements unter der dynamischen Wechselbelastung des Fahrzeugrades.

Vorzugsweise wird während der Bearbeitung des Kopfes des Verbindungselements bzw. der Verbindungsanordnung die zum Fügen der Verbindung vorgesehene Hilfsgeometrie des Verbindungselements bzw. der Verbindungsanordnung vollständig entfernt.

Die Hilfsgeometrie der Verbindungsanordnung kann beispielsweise neben einem Steg, ein Schlitz, ein Innensechskant oder eine anders geformte Inbus-Ausnehmung im Verbindungselement zusätzlich eine Verzahnung im felgenaußenseitigen Rand eines Buchsenteils sein.

Bei dieser Verfahrensausführung befindet sich die Hilfsgeometrie nach dem Einfügen des Verbindungselements bzw. der Verbindungsanordnung außerhalb der felgenaußenseitigen Kontur des Felgenbetts, insbesondere in dem zu entfernenden Teil des Kopfes der Verbindungselements bzw. der Verbindungsanordnung.

Somit wird die Hilfsgeometrie bei der Bearbeitung des Verbindungselements bzw. der Verbindungsanordnung auf einfache Weise komplett entfernt und damit der kerbende, querschnittsschmälernde Einfluss der Hilfsgeometrie auf die Verbindung ausgeschlossen.

Durch die Beseitigung der Hilfsgeometrie werden jegliche Querschnittseinschnürungen, querschnittsschmälernde Vertiefungen und Kerben am Verbindungselement bzw. an der Verbindungsanordnung vollständig vermieden und damit die mit dem Verbindungselement übertragbare Kraft weiter erhöht, was nachhaltig die Zuverlässigkeit und Haltbarkeit der Verbindung verbessert.

Zudem erübrigt sich ein Nacharbeiten bzw. Ausgleichen der Kontur des Kopfes im Bereich der Hilfsgeometrie, um ein vollkommen konturenstetig integriertes Verbindungselement zu erreichen. Die Beseitigung der Hilfsgeometrie und die integrale Anpassung an die stetige Kontur des Felgenbetts werden mit einem einzigen Arbeitsgang erreicht.

Im Ergebnis können mit dem auf diese Weise hergestellten Fahrzeugrad die vorbeschriebenen Vorteile erzielt werden und dabei eine besonders hohe Sicherheit der Verbindung gewährleistet werden.

Nach einer vorteilhaften Ausführung des Verfahrens wird der bearbeitete Kopf des Verbindungselements bzw. die bearbeitete Verbindungsanordnung mit einer Lackschicht überdeckt.

Mit der Lackschicht, welche beispielsweise auch für die Dichtung der felgenaußenseitigen Oberfläche eines Felgenbetts aus Faserverbundwerkstoff Verwendung findet, kann die Dichtung der Reifenkammer gegenüber dem Durchgangsloch mit geringem Aufwand in einem einzigen Arbeitsgang gemeinsam mit der Dichtung des Felgenbetts verwirklicht werden. Zudem kann die Dichtung der Reifenkammer gegenüber dem Durchgangsloch durch die Lackschicht sehr zuverlässig und ggf. unter geringfügigem Konturenausgleich ausgeführt werden.

Diese und weitere aus den Patentansprüchen, der Beschreibung und den Zeichnungen hervorgehenden Merkmale können jeweils für sich oder in Kombination als vorteilhafte Ausführungsformen der Erfindung verwirklicht sein.

Das erfindungsgemäße Verfahren wird in nachfolgenden Ausführungsbeispielen näher erläutert. Die zugehörigen Zeichnungen zeigen in einer schematischen Darstellung in
- Fig.1: eine auszugsweise Schnittdarstellung eines Fahrzeugrades in einem ersten Verfahrensschritt der Herstellung der Verbindung zwischen einer Radfelge und einem Radstern im Tiefbett mittels Flach-Senkkopf-Schraubbolzen als Verbindungselemente,
- Fig. 2: eine auszugsweise Schnittdarstellung des Fahrzeugrades in einem zweiten Verfahrensschritt der Herstellung der Verbindung nach Fig.1,
- Fig. 2a: ein vergrößerter Schnitt A-A aus der Schnittdarstellung des Fahrzeugrades nach Fig. 2,
- Fig. 3: eine auszugsweise Schnittdarstellung eines Fahrzeugrades in einem ersten Verfahrensschritt der Herstellung der Verbindung zwischen einer Radfelge und einem Radstern im Tiefbett mittels mehrteiliger Verbindungsanordnungen,
- Fig. 4: eine auszugsweise Schnittdarstellung des Fahrzeugrades in einem zweiten Verfahrensschritt der Herstellung der Verbindung nach Fig. 3,
- Fig. 5: eine auszugsweise Schnittdarstellung eines Fahrzeugrades in einem ersten Verfahrensschritt der Herstellung der Verbindung zwischen einer Radfelge und einem Radstern im Übergang vom Tiefbett zum Hump mittels Flach-Senkkopf-Schraubbolzen als Verbindungselemente,
- Fig. 6: eine auszugsweise Schnittdarstellung des Fahrzeugrades in einem zweiten Verfahrensschritt der Herstellung der Verbindung nach Fig. 5.

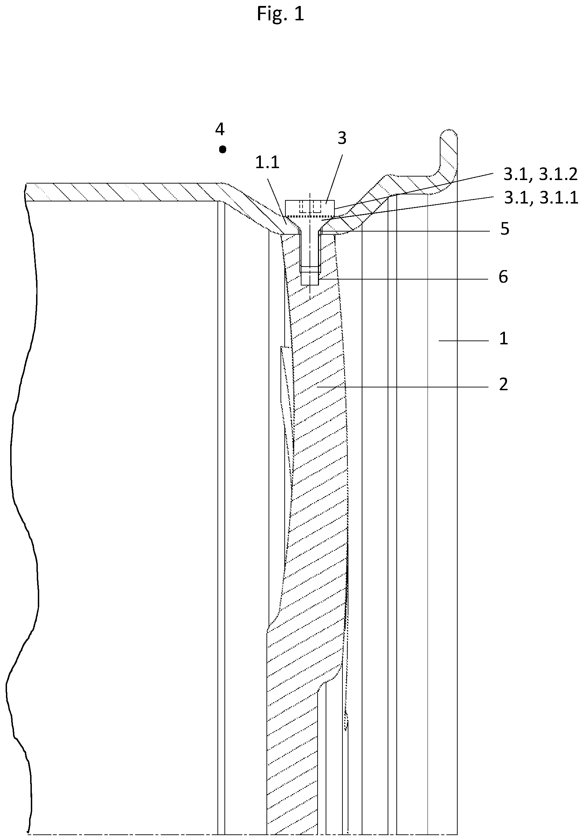

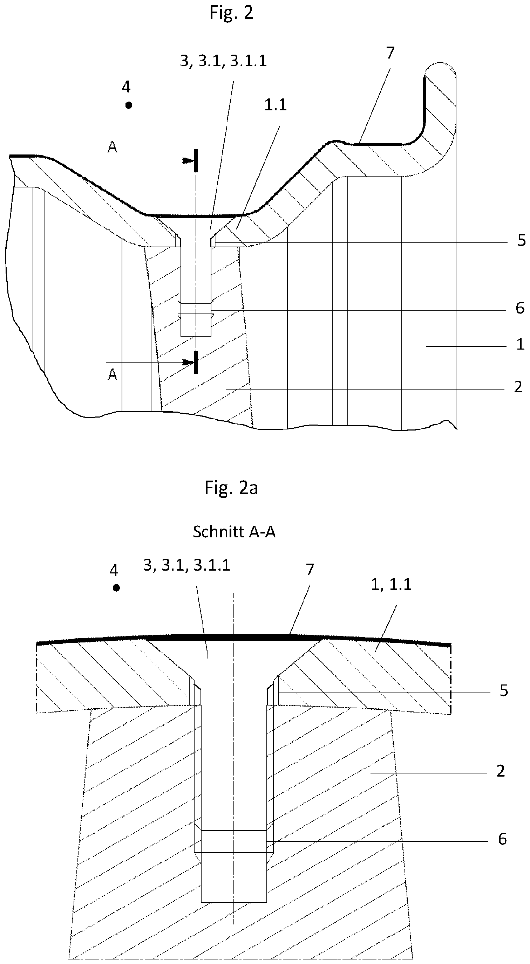

Das erste Ausführungsbeispiel der Erfindung zeigt in Fig. 1 und 2 das erfindungsgemäße Verfahren zur Herstellung der Verbindung eines Fahrzeugrad aus einer Radfelge 1 und einem Radstern 2 aus Aluminium mittels mehrerer, um den Umfang der Radfelge verteilt angeordneter Flach-Senkkopf-Schraubbolzen 3 aus Edelstahl als Verbindungselemente. Die Schnittansichten zeigen den auszugsweisen Schnitt durch das Fahrzeugrad entlang der Längsachse eines der Verbindungselemente 3.

Die Anbindung des Radsterns 2 an die Radfelge 1 erfolgt felgeninnenseitig in Bereich des Tiefbetts 1.1 des Felgenbetts der Radfelge 1. Felgenaußenseitig grenzt eine Reifenkammer 4 des Fahrzeugrades an das Felgenbett an, die von einem nicht dargestellten, schlauchlosen Reifen eingeschlossen ist.

Der Flach-Senkkopf-Schraubbolzen 3 weist einen großformatigen, kombinierten Flach-Senkkopf 3.1 mit einem unteren, konisch geweitetem Senkkopf-Abschnitt 3.1.1 und einem daran anschließenden Flachkopf-Abschnitt 3.1.2 auf, wobei im Flachkopf-Abschnitt 3.1.2 ein Innensechskant als ausnehmende Hilfsgeometrie für die Montage des Flach-Senkkopf-Schraubbolzen 3 ausgebildet ist.

Ein Durchgangsloch 5 durch das Tiefbett 1.1 des Felgenbetts weist felgenaußenseitig eine konisch geweitete Ausnehmung (Senkloch) auf, welche zur Aufnahme des Senkkopf-Abschnitts 3.1.1 des Flach-Senkkopfes 3.1 bestimmt ist.

Felgeninnenseitig korrespondiert jedes der Durchgangslöcher 5 mit jeweils einem längserstreckten Sackloch 6, welches sich in je einem Speichenende des Radsterns 2 erstreckt.

Fig. 1 zeigt in einer Momentaufnahme einen ersten erfindungsgemäßen Verfahrensschritt der Herstellung der Verbindung des Fahrzeugrades zwischen Radfelge 1 und Radstern 2 unmittelbar nach dem Einfügen des Flach-Senkkopf-Schraubbolzens 3.

Der Flach-Senkkopf-Schraubbolzen 3 ist durch das Durchgangsloch 5 geführt und greift mit dem Außengewinde seines Schaftendes in das Innengewinde des Sackloches 6 ein.

Der Flach-Senkkopf-Schraubbolzen 3 wird mittels eines nicht dargestellten Inbus-Werkzeuges festgezogen, welches zu diesem Zweck in den Innensechskant des Flach-Senkkopfs 3.1 eingreift.

Im eingeschraubten Zustand nach Fig. 1 ist einerseits die radiale Außenkontur des im Wesentlichen radial erstreckten Radsterns 2 fest an die felgeninnenseitige Kontur des Tiefbetts angefügt und andererseits eine konische Anlagefläche des Senckopf-Abschnitts 3.1.1 des Flach-Senkkopfs 3.1 an das korrespondierende Senkloch im Felgenbett angepresst.

Der obere Flachkopf-Abschnitt 3.1.2 des Flach-Senkkopfes 3.1 verbleibt im gefügtem, verschraubten Zustand des Flach-Senkkopf-Schraubbolzens 3 im Wesentlichen oberhalb einer gedachten, stetig durchgängigen Konturebene der felgenaußenseitige Kontur des Felgenbetts und bildet im Wesentlichen den über die felgenaußenseitige Kontur des Felgenbetts überstehenden Abschnitt des Flach-Senkkopfes 3.1 des Verbindungselements 3.

Der Innensechskant des Flach-Senkkopfs 3.1 befindet sich im verschraubten Zustand des Flach-Senkkopf-Schraubbolzens 3 oberhalb der felgenaußenseitigen Kontur des Tiefbetts 1.1.

Fig. 2 zeigt in einer Momentaufnahme einen zweiten Verfahrensschritt der Herstellung der Verbindung des Fahrzeugrads nach Fig. 1. In diesem, dem Fügen des Flach-Senkkopf-Schraubbolzens 3 nachfolgendem Verfahrensschritt wurde das Fahrzeugrad auf einer 3-Achs-Fräsmaschine weiterbearbeitet, wobei alle Flach-Senkköpfe 3.1 der eingefügten Flach-Senkkopf-Schraubbolzen 3 mittels eines Planfräser-Werkzeuges plan abgefräst wurden.

Wie genauer aus der vergrößerten Schnittansicht A-A in Fig. 2a ersichtlich ist, wurde der Flach-Senkkopf 3.1 soweit plan abgefräst, dass dieser zumindest an keiner Stelle die umlaufend gekrümmte Felgenaußenseite des Tiefbetts 1.1 überragt, so dass Beschädigungen beim Reifenaufziehen weitestgehend vermieden werden.

Eine überstandsfreie Ausbildung des Flach-Senkkopfes 3.1 ist zumindest dadurch gewährleistet, dass der in tangentialer Richtung der zylindrischen Umfangsfläche des Felgenbetts orientierte Rand des plan bearbeiteten Flach-Senkkopfes 3.1 bündig zu der sich hier anschließenden Umfangsfläche des Tiefbetts 1.1 verläuft.

Zum sicheren Ausschluss jeglichen Überstandes des plan bearbeiteten, verbleibenden Teils des Flach-Senkkopf 3.1 ist dieser gemäß Fig. 2a vorsorglich mit einer geringfügigen aber vollständigen Vertiefung gegenüber der gekrümmten Felgenaußenseite des Tiefbetts 1.1 ausgebildet.

Hierdurch ergibt sich geometrisch, dass die Oberfläche des plan bearbeiteten Flach-Senkkopf 3.1 gegenüber der felgenaußenseitigen Kontur des Tiefbetts 1.1 achsnah tiefer als radial randseitig ausgebildet ist, wie in Fig. 2a ersichtlich ist.

Mit dem Entfernen eines erheblichen Teils des Flach-Senkkopfs 3.1 wird eine massearme Verbindung mit im Wesentlichen geringen Konturabweichungen des Felgenbetts im Bereich der Verbindungsstellen geschaffen.

Zudem wurde ohne weiteres Zutun der Innensechskant des Flach-Senkkopfs 3.1 mit entfernt.

Damit hat der in der Verbindungstelle verbleibende Abschnitt des erfindungsgemäß bearbeiteten Flach-Senkkopfes 3.1, der im Wesentlichen dem Senkkopf-Abschnitts 3.1.1 entspricht, einen homogenen Voll-Querschnitt, ohne eine durch die Hilfsgeometrie hervorgerufene Materialschwachstelle, was die kraftübertragende Eigenschaft des Verbindungselements 3 erheblich verbessert und eine besonders hohe Festigkeit der Verbindung realisiert.

In einem in Fig. 2 und 2a angedeuteten dritten Verfahrensschritt wird zum Zwecke der Abdichtung des Durchgangsloches 5 durch das Felgenbett gegenüber der Reifenkammer 4 die bearbeitete Oberfläche des Flach-Senkkopfes 3.1 und zusätzlich die felgenaußenseitige Oberfläche des Felgenbetts mit einer dünnen Lackschicht 7 überzogen. Die Lackschicht 7 füllt hierbei den vertieften Bereich oberhalb des plan gefrästen Flach-Senkkopfes 3.1 aus und sorgt somit zusätzlich für einen weitest gehenden Konturausgleich.

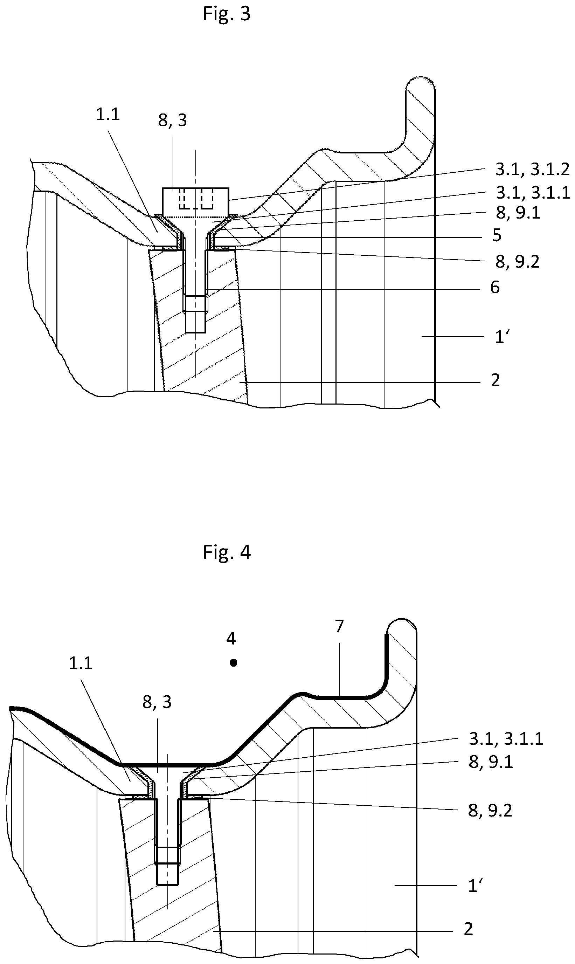

Die Fig. 3 und 4 zeigen in einem zweiten Ausführungsbeispiel das erfindungsgemäße Verfahren zur Herstellung der Verbindung eines Fahrzeugrad, welches aus einer Radfelge 1' aus Faserverbundwerkstoff und einem Radstern 2 aus Aluminium besteht.

Die Verbindung erfolgt im Bereich des Tiefbetts 1.1 mittels mehrerer um den Umfang der Radfelge 1' angeordneten Verbindungsanordnungen 8, jeweils bestehend aus einem Flach-Senkkopf-Schraubbolzen 3 gemäß der Fig. 1 und 2 und einer zweiteiligen Buchse 9. Die Schnittansichten zeigen den auszugsweisen Schnitt durch das Fahrzeugrad entlang der Längsachse der Verbindungsanordnung 8.

Ein erstes und ein zweites Buchsenteil 9.1, 9.2 der zweiteiligen Buchse 4 fassen das Durchgangsloch 5 durch das Felgenbett aus Faserverbundwerkstoff ein.

Das erste Buchsenteil 9.1 erstreckt sich durch das Durchgangsloch 5 und ragt felgeninnenseitig über den Felgenbettquerschnitt des Tiefbetts 1.1 hinaus, während das zweite Buchsenteil 9.2 den überragenden Teil des ersten Buchsenteils 9.1 umschließt und an der Felgeninnenseite des Tiefbetts 1.1 anliegt.

Das erste Buchsenteil 9.1 verfügt felgenaußenseitig über einen konisch geweiteten Randbereich, der in die felgenaußenseitige konisch geweitete Ausnehmung (Senkloch)des Durchgangsloches 5 eingelassen wird und geringfügig über die felgenaußenseitige Oberfläche des Felgenbetts übersteht.

Die Buchsenteile 9.1, 9.2 schaffen eine schützend Trennung des Flach-Senkkopf-Schraubbolzens 3 und des Radsterns 2 vom Felgenbett der Radfelge 1' aus Faserverbundwerkstoff.

Die Fig. 3 zeigt eine Momentaufnahme eines ersten Verfahrensschritts zur Herstellung der Verbindung des Fahrzeugrades unmittelbar nach dem Einfügen der Verbindungsanordnung 8.

Beim Verschrauben des Flach-Senkkopf-Schraubbolzens 3 wird dieser im Unterschied zum Verfahren nach den Fig. 1 und 2 durch das erste und zweite Buchsenteil 9.1, 9.2 der zweiteiligen Buchse 9 geführt und im Sackloch 6 des Radsterns 2 eingeschraubt.

Im eingeschraubten Zustand nach Fig. 3 ist die radiale Außenkontur des Radsterns 2 fest an die felgeninnenseitigen Anlagenflächen des ersten und zweiten Buchsenteils 9.1, 9.2 und die konische Anlagefläche des Senkkopfs-Abschnitts 3.1.1 am korrespondierenden, konisch geweiteten Randbereich des ersten Buchsenteils 9.1 angepresst.

Der obere Flachkopf-Abschnitt 3.1.2 des Flach-Senkkopfes 3.1 des Schraubbolzens 3 und ein Teil des konisch geweiteten Randbereichs des ersten Buchsenteils 9.1 verbleiben im verschraubten Zustand im Wesentlichen oberhalb einer gedachten, stetig durchgängigen Konturebene der felgenaußenseitigen Kontur des Tiefbetts 1.1 und bildet im Wesentlichen den felgenaußenseitig über das Tiefbett 1.1 überstehenden Abschnitt der Verbindungsanordnung 8.

Der ausschließlich im Flachkopf-Abschnitt 3.1.2 angeordnete Innensechskant befindet sich im verschraubten Zustand des Flach-Senkkopf-Schraubbolzens 3 damit ebenfalls außerhalb der felgenaußenseitigen Kontur des Tiefbetts 1.1.

Fig. 4 zeigt in einer Momentaufnahme den zweiten, dem Einfügen nachfolgenden Verfahrensschritt der Herstellung der Verbindung des Fahrzeugrads nach Fig. 3, bei dem das Fahrzeugrad auf einer 5-Achs-Fräsmaschine weiterbearbeitet wurde und der überstehende Abschnitt jeder der Verbindungsanordnungen 8 der Flach-Senkköpfe 3.1 mittels eines Planfräser-Werkzeuges spanenden entfernt.

Das Werkzeug wird in radialer Richtung entlang des Umfangs des Felgenbetts geführt, so dass ein konturgetreues Abtragen der überstehenden Abschnitte der Verbindungsanordnungen 8 erfolgt und die verbleibenden, im Felgenbett eingelassenen Abschnitte der Verbindungsanordnungen 8, welche im Wesentlichen jeweils dem Senkkopf-Abschnitt 3.1.1 des Flach-Senkkopfes 3.1 mit dem eingelassenen Randbereich des ersten Buchsenteils 9.1 entsprechen, konturgetreu an die felgenaußenseitige Kontur des Tiefbetts 1.1 angepasst sind.

Gleichzeitig wird der Innensechskant des Flach-Senkkopfs 3.1 bei der Bearbeitung des überstehenden Abschnitts der Verbindungsanordnung 8 vollständig entfernt.

Im Ergebnis wird ein allseits stetiger Verlauf der felgenaußenseitigen Kontur des Felgenbetts im Bereich des Tiefbetts 1.1 sowohl in axialer Erstreckung als auch umlaufend um die zylindrische Umfangsfläche des Felgenbetts erzeugt, in welcher die felgenaußenseitig angrenzende Verbindungsanordnung 8 aus Flach-Senkkopf-Schraubbolzen 3 und erstem Buchsenteil 9.1 ohne jegliche Konturen-Unstetigkeiten integriert ist.

In einem in Fig. 4 angedeutetem dritten Verfahrensschritt werden zur der Abdichtung des Durchgangsloches 5 einerseits und des Felgenbetts aus Faserverbundwerkstoff andererseits gegenüber der Reifenkammer 4 die bearbeitete Oberfläche der Verbindungsanordnung 8 sowie die felgenaußenseitige Oberfläche des Felgenbetts durchgehend und in einem Arbeitsgang mit einer dünnen Lackschicht 7 überzogen.

Mit diesem Verfahrensbeispiel werden im Übrigen ebensolche Vorzüge, wie beim Verfahrensbeispiel nach Fig. 1 und 2 beschrieben, erzielt.

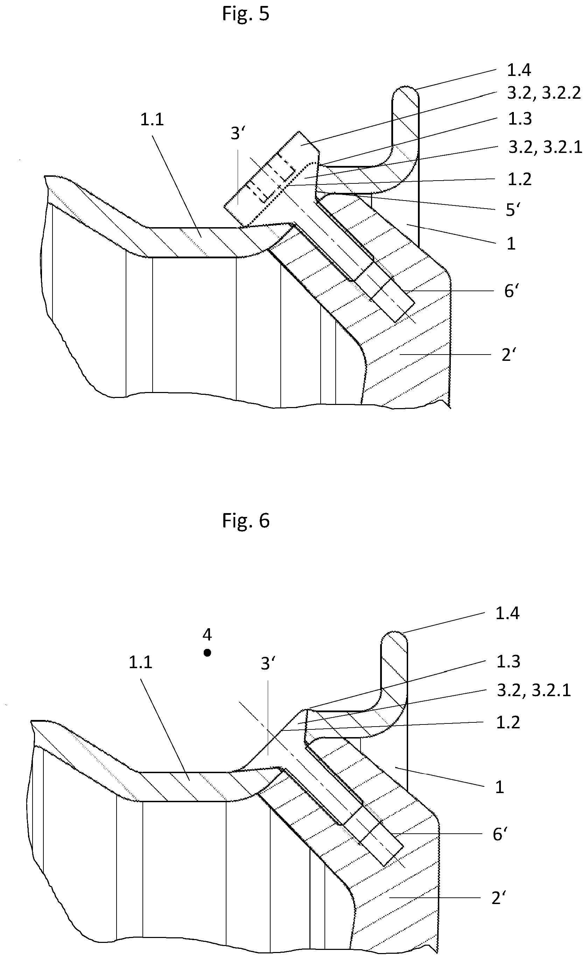

In einem dritten Ausführungsbeispiel zeigen die Figuren 5 und 6 das erfindungsgemäße Verfahren zur Herstellung der Verbindung des Fahrzeugrads mit einer Radfelge 1 gemäß dem ersten Ausführungsbeispiel nach den Figuren 1, 2 und 2a und einem Radstern 2' mit abwinkelten Speichenenden aus Aluminium, wobei die Radfelge 1 und der Radstern 2' mit über dem Umfang der Radfelge 1 verteilt angeordneten kombinierten Flach-Senkkopf-Schraubbolzen 3' verbunden werden, die ähnlich der vorhergehenden Ausführungsbeispiele ausgebildet sind. Die Schnittansichten zeigen den auszugsweisen Schnitt durch das Fahrzeugrad entlang der Längsachse eines der Verbindungselemente 3'.

Im Unterschied zum Flach-Senkkopf-Schraubbolzen 3 nach den vorhergehenden Ausführungsbeispielen weist der hier verwendete Flach-Senkkopf-Schraubbolzen 3' einen größeren Querschnitt und einen abgewandelten Flach-Senkkopf 3.2 auf, dessen Senkkopf-Abschnitt 3.2.1. deutlich länger als der Flachkopf-Abschnitt 3.2.2 ausgebildet ist.

Im weiteren Unterschied zu den vorhergehenden Ausführungsbeispielen erfolgt die Anbindung des Radsterns 2' an die Radfelge 1 felgeninnenseitig in einem schräg verlaufendem Übergangsbereich 1.2 zwischen dem Tiefbett 1.1 und der Felgenschulter (Hump) 1.3 des Felgenbetts der Radfelge 1.

Dementsprechend ist jedes der Durchgangslöcher 5' senkrecht zu diesem schräg verlaufenden Übergangsbereich 1.2 vom Tiefbett 1.1 zum Hump 1.3 angeordnet und korrespondiert jeweils mit einem Sackloch 6', welches sich im abwinkelten Speichenende des Radsterns 2' längs erstreckt.

Die Anschlussflächen der gekrümmten Speichenenden des Radsterns 2' sind an die felgeninnenseitige Kontur des schrägen Übergangsbereiches 1.2 vom Tiefbett 1.1 zum Hump 1.3 angepasst ausgebildet.

Korrespondierend zum Flach-Senkkopf 3.2 weist das Durchgangsloch 5' zur Aufnahme des Senkkopf-Abschnitts 3.2.1 eine große, konisch geweitete Ausnehmung (Senkloch) auf, welche sich über einen erheblichen Längenabschnitt des Durchgangsloches 5' erstreckt.

Fig. 5 zeigt in einer Momentaufnahme einen ersten erfindungsgemäßen Verfahrensschritt der Herstellung der Verbindung dieses Fahrzeugrades unmittelbar nach dem Einfügen des Flach-Senkkopf-Schraubbolzen 3'.

Der Flach-Senkkopf-Schraubbolzen 3' ist durch Durchgangsloch 5' geführt und greift mit seinem Außengewinde in das Innengewinde des Sacklochs 6' ein.

Der Senkkopf-Schraubbolzen 3', wird mittels eines nicht dargestellten Inbus-Werkzeuges festgezogen, welches in den Innensechskant eingreift, der im Flachkopf-Abschnitt 3.2.2 des Flach-Senkkopfs 3.2 ausgebildet ist.

Im eingeschraubten Zustand nach Fig. 5 sind die Anschlussflächen der gekrümmten Speichenenden des Radsterns 2' fest an die felgeninnenseitige Kontur des schrägen Übergangsbereiches 1.2 angefügt und die konische Anlagefläche des Senkkopf-Abschnitts 3.2.1 des Flach-Senkkopfs 3.2 an das korrespondierende Senkloch angepresst.

Der obere Flachkopf-Abschnitt 3.2.2 des Flach-Senkkopfes 3.2 verbleibt im gefügten, verschraubten Zustand des Flach-Senkkopf-Schraubbolzens 3' im Wesentlichen außerhalb der gedachten, durchgängigen Konturebene der felgenaußenseitigen Kontur des Felgenbetts im Übergangsbereich 1.2 vom Tiefbett 1.1 zum Hump 1.3 und bildet im Wesentlichen den über die felgenaußenseitige Kontur des Felgenbetts überstehenden Abschnitt des Verbindungselements 3'.

Der Innensechskant des Flach-Senkkopfs 3.1 befindet sich im Flachkopf-Abschnitt 3.2.2 und somit im verschraubten Zustand des Flach-Senkkopf-Schraubbolzens 3' außerhalb der felgenaußenseitigen Kontur des Felgenbetts im Übergangsbereich 1.2.

Fig. 6 zeigt in einer Momentaufnahme einen zweiten Verfahrensschritt der Herstellung der Verbindung des Fahrzeugrads nach Fig. 5.

In diesem dem Fügen des Flach-Senkkopf-Schraubbolzens 3' nachfolgendem Verfahrensschritt wurden die überstehenden Abschnitte des Flach-Senkkopfs 3.2 mittels eines Kugel- oder Formfräsers-Werkzeugs einer 5-Achs-Fräsmaschine entfernt.

Das Werkzeug wird sowohl in radialer Richtung entlang des Umfangs des Felgenbetts geführt und kann auch axial seitwärts geschwenkt werden, so dass ein konturgetreuer Verlauf der abzutragenden Flach-Senkköpfe 3.2 auch an den Übergangsradien des Übergangsbereichs 1.2. hergestellt werden kann.

Die verbleibenden, im Felgenbett eingelassenen Abschnitte der Flach-Senkköpfe 3.2, welcher im Wesentlichen jeweils dem Senckopf-Abschnitt 3.2.1 entsprechen, sind damit konturgetreu an die felgenaußenseitige Kontur des Übergangsbereiches 1.2 vom Tiefbett 1.1 bis zum Hump 1.3 angepasst. Hierbei bildet die bearbeitete Kontur der verbleibenden Abschnitte der Flach-Senkköpfe 3.2 auch einen Teil der Kontur des Tiefbetts 1.1 und des Hump 1.3.

Bei der formgebende Bearbeitung der Flach-Senkköpfe der Verbindungselemente 3' wird jeweils der Innensechskant jedes Flach-Senkkopfs 3.2 vollständig entfernt.

Im Ergebnis erzeugt die Bearbeitung des Flach-Senkkopfes 3.1 einen stetigen Verlauf des Felgenbetts im Übergangsbereich 1.2 zwischen Tiefbett 1.1 und Hump 1.3 sowohl in axialer Erstreckung als auch umlaufend um die zylindrische Umfangsfläche des Felgenbetts.

Mit diesem Verfahrensbeispiel wird insbesondere gezeigt, dass auch Verbindungselemente mit großem Querschnitt und einer hohen kraftübertragenden Eigenschaft, wie der Flach-Senkkopf-Schraubbolzen 3', ohne jegliche Konturen-Unstetigkeiten, selbst in besonders engen Bereichen, wie dem Übergangsbereich 1.2 zwischen Tiefbett 1.1 und Hump 1.3 integrierbar sind.

Der Übergang vom Tiefbett 1.1 zum Hump 1.3 wird durch den Platzbedarf der Verbindungselemente 3' wenig beeinflusst, so dass das Tiefbett 1.1 trotz der großräumigen Verbindungselemente 3' raumsparend mit geringer Tiefe ausgebildet sein kann, was mit einer günstigen Massenoptimierung an der Radfelge 1 verbunden ist.

Zugleich hat der erfindungsgemäß bearbeitete Flach-Senkkopf-Schraubbolzen 3' einen homogenen Voll-Querschnitt, ohne der materialschwächenden Hilfsgeometrie, was die kraftübertragende Eigenschaft des Verbindungselements 3' erheblich verbessert und eine besonders feste Verbindung gewährleistet.

In einem nicht dargestellten dritten Verfahrensschritt des Ausführungsbeispiels kann zum Zwecke der Abdichtung des Durchgangsloches 5' durch das Felgenbett gegenüber der Reifenkammer 4 die bearbeitete Oberfläche des Flach-Senkkopfes 3.2 und zusätzlich die felgenaußenseitige Oberfläche des Felgenbetts mit einer dünnen Lackschicht 7 überzogen werden.

Die Verbindungen können dank der erfindungsgemäßen, vorteilhaften Verfahrensweise außer in den beschriebenen Verfahrensbeispielen auch in jeglichem anderen Bereich des Felgenbetts, wie beispielsweise auch im besonders schmalen Bereich des Reifensitzes zwischen Hump 1.3 und Felgenhorn 1.4, ausgebildet sein, da die Verbindungselemente 3, 3' bzw. die Verbindungsanordnungen 8 weitestgehend unabhängig von ihrer Größe in jeden Konturenabschnitt des Felgenbetts integrierbar sind.

### Bezugszeichenliste

- 1: Radfelge
- 1.1: Tiefbett
- 1.2: Übergangsbereich
- 1.3: Felgenschulter, Hump
- 1.4: Felgenhorn
- 2: Radscheibe, Radstern
- 3: Verbindungselement,Flach-Senkkopf-Schraubbolzen
- 3.1: Flach-Senkkopf des Schraubbolzens
- 3.1.1: Senkkopfabschnitt des Flach-Senkkopfs
- 3.1.2: Flachkopfabschnitt des Flach-Senkkopfs
- 3.2: Flach-Senkkopf des alternativen Schraubbolzens
- 3.2.1: Senkkopfabschnitt des Flach-Senkkopfs 3.2
- 3.2.2: Flachkopfabschnitt des Flach-Senkkopfs 3.2
- 4: Reifenkammer
- 5: Durchgangsloch
- 6: Sackloch
- 7: Dichtmittel, Lackschicht
- 8: Verbindungsanordnung
- 9: zweiteilige Buchse
- 9.1: erstes Buchsenteil
- 9.2: zweites Buchsenteil

## Patentansprüche

1. Verfahren zur Herstellung eines Fahrzeugrads mit einer Verbindung zwischen einer Radfelge und einer Radscheibe, bei der die Radscheibe mittels wenigstens eines Verbindungselements, welches durch ein Durchgangsloch des Felgenbetts geführt und in der Radscheibe gefügt wird, mit der Radfelge verbunden wird
**dadurch gekennzeichnet, dass**
nach dem Fügen des Verbindungselements (3) in der Radscheibe (2) ein Abschnitt des Kopfes (3.1, 3.2) des Verbindungselements (3) felgenaußenseitig über das Felgenbett (1.1, 1.2) überstehend verbleibt und anschließend der Kopf (3.1, 3.2) des Verbindungselements (3) zumindest teilweise entfernt wird.

2. Verfahren nach Anspruch 1,
**dadurch gekennzeichnet, dass**
das Verbindungselement (3) Teil einer Verbindungsanordnung (8) ist und nach dem Fügen der Verbindungsanordnung (8) in der Radfelge (1) und
der Radscheibe (2) ein Abschnitt der Verbindungsanordnung (8) felgenaußenseitig über das Felgenbett (1.1) überstehend verbleibt und anschließend die Verbindungsanordnung (8) zumindest teilweise entfernt wird.

3. Verfahren nach Anspruch 1 oder 2,
**dadurch gekennzeichnet, dass**
**dadurch gekennzeichnet, dass** der Kopf (3.1, 3.2) des Verbindungselements (3) bzw. die Verbindungsanordnung (8) formgebend bearbeitet wird sodass das Verbindungselement (3) bzw. die Verbindungsanordnung (8) konturgetreu an die felgenaußenseitige Kontur des Felgenbetts (1.1, 1.2) angepasst wird.

4. Verfahren nach Anspruch 1 oder 2,
**dadurch gekennzeichnet, dass**
der Kopf (3.1) des Verbindungselements (3) bzw. die Verbindungsanordnung (8) plan bearbeitet wird, so dass das Verbindungselement (3) bzw. die Verbindungsanordnung (8) zumindest teilweise bündig mit der felgenaußenseitigen Kontur des Felgenbetts (1.1) abschließt oder eine Vertiefung gegenüber der felgenaußenseitigen Kontur des Felgenbetts (1.1) bildet.

5. Verfahren nach einem der vorhergehenden Ansprüche,
**dadurch gekennzeichnet, dass**
der Kopf (3.1, 3.2) des Verbindungselements (3) bzw. die Verbindungsanordnung (8) durch eine spanende Bearbeitung, vorzugsweise durch Drehen, Schleifen oder Fräsen bearbeitet wird.

6. Verfahren nach einem der vorhergehenden Ansprüche,
**dadurch gekennzeichnet, dass**
der Kopf (3.1, 3.2) des Verbindungselements (3) bzw. ein radial erweiterter Abschnitt der Verbindungsanordnung (8, 3.1, 9.1,) zumindest teilweise in eine formschlüssig korrespondierende Ausnehmung des Durchgangsloches (5) eingelassen wird.

7. Verfahren nach einem der vorhergehenden Ansprüche,
**dadurch gekennzeichnet, dass**
bei der Bearbeitung des Kopfes (3.1, 3.2) des Verbindungselements (3) bzw. der Verbindungsanordnung (8) die Hilfsgeometrie zur Montage des Verbindungselements (3) bzw. der Verbindungsanordnung (8) vollständig entfernt wird.

8. Verfahren nach einem der vorhergehenden Ansprüche,
**dadurch gekennzeichnet, dass**
der bearbeitete Kopf (3.1) des Verbindungselements (3) bzw. die bearbeitete Verbindungsanordnung (8) mit einer Lackschicht (7) überdeckt wird.

9. Fahrzeugrad mit einer Verbindung zwischen einer Radfelge und einer Radscheibe, bei der die Radscheibe mittels wenigstens eines Verbindungselements, welches durch ein Durchgangsloch des Felgenbetts geführt und in der Radscheibe gefügt ist, mit der Radfelge verbunden ist
**dadurch gekennzeichnet, dass**
ein Abschnitt des Kopfes (3.1, 3.2) des Verbindungselements (3) und eine Buchse (9) felgenaußenseitig über das Felgenbett (1.1, 1.2) überstehend ausgebildet sind und der Kopf (3.1, 3.2) des Verbindungselements (3) zumindest teilweise entfernt ist.

## Claims

1. Method for the production of a vehicle wheel with a connection between a wheel rim and a wheel disc, where the wheel disc is connected to the wheel rim by at least one connecting element, which is guided through a through hole of the rim bed and joined within the wheel disc,
**characterized in that**,
after joining the connecting element (3) within the wheel disc (2), a section of the head (3.1, 3.2) of the connecting element (3) remains projecting over the rim bed (1.1, 1.2) on the outside of the rim and then, the head (3.1, 3.2) of the connecting element (3) is at least partially removed.

2. Method according to Claim 1,
**characterized in that**
the connecting element (3) is part of a connection arrangement (8) and, after joining the connection arrangement (8) within the wheel rim (1) and the wheel disc (2), a section of the connection arrangement (8) remains projecting over the rim bed (1.1) on the outside of the rim and then, the connection arrangement (8) is at least partially removed.

3. Method according to Claim 1 or 2,
**characterized in that**
the head (3.1, 3.2) of the connecting element (3) or the connection arrangement (8) is machined in a shape-forming manner so that the connecting element (3) or the connection arrangement (8) is adjusted to the contour of the rim bed (1.1, 1.2) on the outside of the rim, thereby following the contour in an accurate manner.

4. Method according to Claim 1 or 2,
**characterized in that**
the head (3.1) of the connecting element (3) or the connection arrangement (8) is machined to be flush so that the connecting element (3) or the connection arrangement (8) at least partially flush with the contour of the rim bed (1.1) on the outside of the rim or forms a recess with respect to the contour of the rim bed (1.1) on the outside of the rim.

5. Method according to any one of the preceding claims,
**characterized in that**
the head (3.1,3.2) of the connecting element (3) or the connection arrangement (8) is machined, preferably by means of turning, grinding, or milling.

6. Method according to any one of the preceding claims,
**characterized in that**
the head (3.1,3.2) of the connecting element (3) or a radially extended section of the connection arrangement (8, 3.1, 9.1,) is at least partially inserted into a corresponding form-fitting recess of the through hole (5) .

7. Method according to any one of the preceding claims,
**characterized in that**,
when machining the head (3.1, 3.2) of the connecting element (3) or the connection arrangement (8), the auxiliary geometry for mounting the connecting element (3) or the connection arrangement (8) is completely removed.

8. Method according to any one of the preceding claims,
**characterized in that**
the machined head (3.1) of the connecting element (3) or the machined connection arrangement (8) is covered with a coating layer (7).

9. Vehicle wheel with a connection between a wheel rim and a wheel disc, in which the wheel disc is connected to the wheel rim by at least one connecting element, which is guided through a through hole of the rim bed and joined within the wheel disc,
**characterized in that**
a section of the head (3.1, 3.2) of the connecting element (3) and a connector (9) are formed projecting over the rim bed (1.1, 1.2) on the outside of the rim, and the head (3.1, 3.2) of the connecting element (3) is at least partially removed.

## Revendications

1. Procédé, destiné à fabriquer une roue de véhicule pourvue d'un assemblage entre une jante de roue et un disque de roue, lors duquel on assemble le disque de roue avec la jante de roue au moyen d'au moins un élément d'assemblage, que l'on guide à travers un trou de passage dans la base de jante et que l'on fixe dans le disque de roue,
**caractérisé**
**en ce qu'**après la fixation de l'élément d'assemblage (3) dans le disque de roue (2), il reste un segment de la tête (3.1, 3.2) de l'élément d'assemblage (3) débordant sur la face extérieure de la jante au-delà de la base de jante (1.1, 1.2) et **en ce qu'**ensuite, on retire au moins en partie la tête (3.1, 3.2) de l'élément d'assemblage (3).

2. Procédé selon la revendication 1,
**caractérisé en ce que**
l'élément d'assemblage (3) est une partie d'un ensemble d'assemblage (8) et après la fixation de l'ensemble d'assemblage (8) dans la jante de roue (1) et le disque de roue (2), il reste un segment de l'ensemble d'assemblage (8) débordant sur la face extérieure de la jante au-delà de la base de jante (1.1) et **en ce qu'**ensuite, on retire au moins en partie l'ensemble d'assemblage (8).

3. Procédé selon la revendication 1 ou 2,
**caractérisé**
**en ce qu'**on usine en façonnage la tête (3.1, 3.2) de l'élément d'assemblage (3) ou l'ensemble d'assemblage (8), de telle sorte que l'élément d'assemblage (3) ou l'ensemble d'assemblage (8) soit adapté au contour près au contour de la base de jante (1.1, 1.2).

4. Procédé selon la revendication 1 ou 2,
**caractérisé**
**en ce qu'**on usine la tête (3.1) de l'élément d'assemblage (3) ou l'ensemble d'assemblage (8) de manière plane, de sorte que l'élément d'assemblage (3) ou l'ensemble d'assemblage (8) se termine au moins partiellement à fleur du contour de la face extérieure de la jante de la base de jante (1.1) ou forme un creux par rapport au contour de la face extérieure de la jante de la base de jante (1.1).

5. Procédé selon l'une quelconque des revendications précédentes,
**caractérisé**
**en ce qu'**on usine la tête (3.1, 3.2) de l'élément d'assemblage (3) ou l'ensemble d'assemblage (8) par enlèvement de copeaux, de préférence par tournage, ponçage ou fraisage.

6. Procédé selon l'une quelconque des revendications précédentes,
**caractérisé**
**en ce qu'**on engage au moins partiellement la tête (3.1, 3.2) de l'élément d'assemblage (3) ou un segment élargi en direction radiale de l'ensemble d'assemblage (8, 3.1, 9.1,) dans un évidement correspondant par complémentarité de forme du trou de passage (5).

7. Procédé selon l'une quelconque des revendications précédentes, **caractérisé en ce que**
lors de l'usinage de la tête (3.1, 3.2) de l'élément d'assemblage (3) ou de l'ensemble d'assemblage (8), on retire totalement la géométrie auxiliaire pour le montage de l'élément d'assemblage (3) ou de l'ensemble d'assemblage (8).

8. Procédé selon l'une quelconque des revendications précédentes, **caractérisé**
**en ce qu'**on recouvre la tête (3.1) de l'élément d'assemblage (3) usinée ou l'ensemble d'assemblage (8) usiné d'une couche de vernis (7).

9. Roue de véhicule, dotée d'un assemblage entre une jante de roue et un disque de roue, sur laquelle le disque de roue est assemblé avec la jante de roue au moyen d'au moins un élément d'assemblage, lequel est guidé à travers un trou de passage de la base de jante et fixé dans le disque de roue,
**caractérisée**
**en ce qu'**un segment des tête (3.1, 3.2) de l'élément d'assemblage (3) et une douille (9) sont conçus en débordant sur la face extérieure de la jante au-delà de la base de jante (1.1, 1.2) et **en ce que** la tête (3.1, 3.2) de l'élément d'assemblage (3) est retirée au moins partiellement.
